(19) **Europäisches Patentamt**

**European Patent Office**

**Office européen des brevets**

(11) **EP 1 324 512 B1**

(12) **EUROPEAN PATENT SPECIFICATION**

(45) Date of publication and mention
of the grant of the patent:
**06.10.2004 Bulletin 2004/41**

(51) Int Cl.⁷: **H04B 7/08**, H01Q 3/24

(21) Application number: **02026143.4**

(22) Date of filing: **23.11.2002**

(54) **A method and a device for the reception of radio signals, particulary digital, multi-carrier signals**

Methode und Apparat zum Empfang von Funksignalen, insbesondere digitalen Mehrträgersignalen

Méthode et appareil pour la réception de signaux radio, en particulier pour des signaux numériques à porteuses multiples

(84) Designated Contracting States:
**AT BE BG CH CY CZ DE DK EE ES FI FR GB GR IE IT LI LU MC NL PT SE SK TR**

(30) Priority: **21.12.2001 IT TO20011200**

(43) Date of publication of application:
**02.07.2003 Bulletin 2003/27**

(73) Proprietor: **RAI RADIOTELEVISIONE ITALIANA (S.p.A.)**
**00195 Roma (IT)**

(72) Inventors:
• **Sacco, Bruno**
**10154 Torino (IT)**
• **Bertella, Andrea**
**10071 Borgaro (Prov. of Torino) (IT)**
• **Forni, Benvenuto Paolo**
**13881 Cavaglià (Prov. of Torino) (IT)**

(74) Representative: **Spandonari, Carlo, Dr. Ing.**
**Spandonari & Modiano s.r.l.**
**corso Duca degli Abruzzi 16**
**10129 Torino (IT)**

(56) References cited:
WO-A-96/08850          GB-A- 2 363 256
US-A- 5 303 240         US-A- 5 905 473
US-A- 5 982 327         US-A- 6 009 124
US-B1- 6 249 250        US-B1- 6 331 837

EP 1 324 512 B1

**Description**

This invention is concerned with a new method and device for the reception of radio signals affected by a decay originating from echo-ridden transmission or over multiple paths. The invention is particularly, though not exclusively, intended for the reception of digital signals transmitted by Coded Orthogonal Frequency Division Multiplex, or multi-carrier, known as C-OFDM, and particularly of audio and video signals transmitted by the European standard ETSI ETS 300 744, "*Digital broadcasting system for television, sound and data services; Framing structure, channel coding and modulation for digital terrestrial television*" (which, for the sake of simplicity, will be denoted by the acronym DVB-T, or Digital Video Broadcasting - Terrestrial).

It is well known that a signal received via an aerial is, in general, a superposition of a plurality of contributions given by waves propagating from the transmitting antenna to the receiving antenna over different paths created by the inhomogeneity of the transmissive environment, which causes reflections, diffractions and ray bending. For simplicity, all of the above will be called echoes or rays, whereby, however, all the possibilities are intended. The above contributions add up vectorially in the receiving antenna, i.e. each contributing its own absolute value and phase. The superposition of two contributions to the signal may therefore cause an amplitude increase in the received signal, but, on the other hand, it may decay the signal when the contributions are out of phase, and may even annihilate it if the out-of-phase contributions have the same amplitude. Moreover, for a given location of the receiver with respect to transmissive environment, the signal decay is also a function of frequency, since the phase difference, and to a lower degree also the amplitude attenuation, depend on the frequency, all circumstances being equal (such as positions of the transmitter and the receiver, positions and nature of obstacles on the transmission channel, aerial directivity, etc.).

In the particular case of C-OFDM, as used, for instance, in the so-called digital terrestrial television, where the information transmitted is subdivided over a large number of carrier frequencies, the signal received at the receiver may show reception notches which are variously located on the spectrum of carrier frequencies, with error rates which, in certain cases, may be too large for correction by the error correction facilities that are incorporated in the system. As a person skilled in the art will understand, the position in the spectrum and the magnitude of such reception notches depend heavily on the position of the receiver with respect to the transmissive channel, whereby the reception quality may undergo drastic changes even for very small displacements of the receiver, say for displacement of only 10 to 20 cm in the case of a digital terrestrial television receiver, if one considers that the carrier wavelengths are shorter than 1 m.

For protection against signal decay due to above reasons, the C-OFDM system is provided with a powerful error-correction mechanism, which, however, turns out to be poorly effective against secondary signals caused by short echoes. Laboratory experiments and simulations made at the Centro Ricerche e Innovazione Tecnologica della RAI in Torino, Italy, have shown that for very small values of $\tau$ there is a deterioration in performance. This is due to the fact that a short echo causes a notch in the channel's frequency response $H(\omega)$, which notch has a larger width than the sum of the notches caused by a long echo. The phase of the echo, and therefore the location of the notch frequency, play an important role for small values of $\tau$, though this is not true for large values of $\tau$. Accordingly, in an environment where one or more short echoes are present, the reception may be more or less degraded, depending on the echo phases. The probability of an accurate reception over a single radio channel can therefore collapse in presence of short echoes, and the probability of accurate reception of a number N>1 of several channels, which is the product of the individual probabilities, drops exponentially. Document US 5 982 327 discloses an adaptive antenna system to improve the quality of the received signal.

In the entire specification and claims, the expression "short echo" refers to an echo whose delay is of the order of magnitude of the reciprocal of the bandwidth of the received signal.

It is therefore the main object of the invention to provide a method and an apparatus for the reception of radio signals, particularly digital multi-carrier signals such as C-OFDM, which can obviate to the degradation of reception due to an unfavourable superposition of signals which have propagated over different paths.

Another object is to provide the above reception apparatus in a separate version, which can operate when connected to a conventional receiver but independently from it, so that it can be attached to the receiver as an accessory.

The invention achieves the above and other objects and advantages by a method for the reception of radio signals, particularly digital multi-carrier, having the features set out in claim 1.

The invention also provides an apparatus embodying the above method, and having the features set out in claim 2.

The remaining subordinate claims attached recite other advantageous features of the invention.

Substantially, in the present invention a system of antennas is used which, by switching its beam in a discrete number of different directions, can discriminate some of the echoes giving rise to the degradation, by enhancing the contribution of the favourable ones. The effectiveness of the system is improved if the above action is enhanced by simultaneously shifting the center of phase of the radiating system.

The features, aims and advantages of the invention will appear more clearly from the detailed disclosure of a few preferred embodiments, given with reference to the attached drawings, by way of non limiting example, wherein:

Fig. 1 is a diagram of the channel's impulse response in presence of two signal propagation rays;

Fig. 2 is a diagram showing the vector sum of the contributions from the two rays of Fig. 1;

Fig. 3 is a diagram of the channel's frequency response in presence of two signal propagation rays;

Fig. 4 us a diagram similar to Fig. 1, in presence of a plurality of signal propagation rays;

Fig. 5 is a diagram of the channel's frequency response in presence of a plurality of signal propagation rays;

Fig. 6 is a block diagram of a reception apparatus incorporating the teachings of the invention;

Fig. 7 is a perspective view of an antenna array which can be used with the reception apparatus of the invention;

Fig. 8 is a plan view of the antenna array of Fig. 7;

Fig. 9 is a perspective view of a revolving antenna which can be used with the reception apparatus of the invention;

Fig. 10 is a block diagram of a preferred embodiment of an analyzer belonging to the invention;

Fig. 11 is a diagram illustrating the operation of the invention;

Fig. 12 is a diagram illustrating the operation of the invention;

Fig. 13 is a diagram illustrating the operation of the invention;

Fig. 14 is a table of possible configurations of the levels of the signal received by an analyzer according to Fig. 10;

Fig. 15 is a block diagram of a separate reception apparatus to be used together with a convention radio receiver.

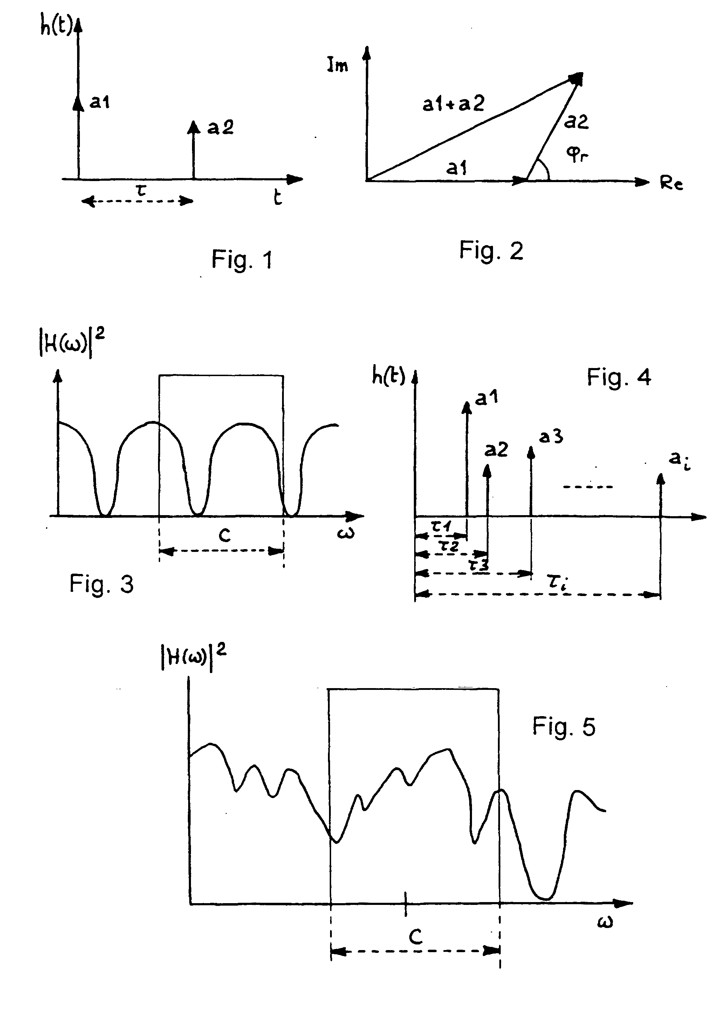

As stated above, a signal received by an antenna is, in general, the superposition of a plurality of contributions consisting of waves propagating from the transmitting antenna to the receiving antenna along different paths, created by the inhomogeneity of the transmissive environment, which causes reflections, diffractions and ray bending. For simplicity, all of the above will be called echoes or rays in the disclosure below, whereby, however, all the possibilities are intended. The contributions add up vectorially in the receiving antenna, i.e. each contributing its own absolute value and phase. As shown on Fig. 1, in the elementary case of only two rays, $a_1$ and $a_2$ with delay $\tau$, the channel's impulse response is:

$$h(t)=a_1\delta(t)+a_2\delta(t\text{-}\tau)$$

where $\delta(t)$ is the Dirac Delta function, and $a_1$ and $a_2$ are complex values. Fig. 2 shows the sum of the two vectors, whereby the phase of $a_1$ is set at zero, and $\varphi_r$ is the phase of $a_2$. This phase is essentially introduced by the reflection or diffraction that has caused the echo, as well as by the receiving antenna, if the latter is not isotropic in the ray plane. The frequency response, obtained from $h(t)$ by Fourier transform, is:

$$H(\omega) = a_1 + a_2 \exp [\text{-}j(\omega\tau + \varphi_2)]$$

The absolute value of $H(\omega)$ looks as shown on Fig. 3, i.e. having frequencies where the signal is attenuated by destructive interference and where the undulation is the more pronounced, the more $|a_1| \cong |a_2|$ is true. In the Figure, the signal's radio channel is referenced with C, in order to emphasize the comparison with the undulation.
As the echo delay $\tau$ increases, the argument of the exponential changes more rapidly with $\omega$, therefore the undulation is closer. Consequently, in the radio channel band used there are more notches, although narrower. The absolute position of the "comb" of notches depends on the phase angle $\varphi_2$ of ray $a_2$ (with respect to the phase of $a_1$).
More generally, in the case of a plurality of signal propagation paths, with contributions $a_i = |a_i|\cdot e^{j\varphi i}$, the vector diagram takes the look shown on Fig. 4. The impulse response is:

$$h(t) = \sum_i a_i \delta(t - \tau_i)$$

and the corresponding frequency response will have in general a quite irregular shape, as shown in Fig. 5 by way of example, where, again, the radio channel used is illustrated as C.

The received signal is therefore affected by the channel's response according to the following equation:

$$Y(\omega) = X(\omega) \cdot H(\omega)$$

where $X(\omega)$ and $Y(\omega)$ are the Fourier transforms of the trasnitted signal and the received signal, respectively. The weighting effect, frequency by frequency, of $H(\omega)$ on the transmitted signal has different effects on the reception, depending on the kind of modulation used. Receivers for analog modulations usually show distorsions on the demodulated signal; receivers for digital modulations show an increase of the error rate, and a reduction of the operating margin on the radio link.

In the particular case of C-OFDM, the notches in $H(\omega)$ attenuate the rispective frequencies of the signal beyond the threshold value of the signal to noise ratio (C/N), beneath which the individual subcarrier collapses, with a consequent very high error rate ($\cong 0.5$) in that subcarrier. Overall, the C-OFDM receiver, which incorporates a powerful error corrector, can operate in presence of a certain number of subcarriers beneath the threshold, but when that condition is exceeded, the entire receiver collapses.

Accordingly, the performance of a typical C-OFDM receiver is such that its operation, or at least the limited degradation in performance, is described by a curve in the $\tau$-NML plane, where $\tau$ is the ray's delay and NML (noise margin loss) is the increase of the required C/N ratio for compensating the degradation; this curve is essentially flat up to values of $\tau$ near the duration of the safe interval, then the curve diverges.

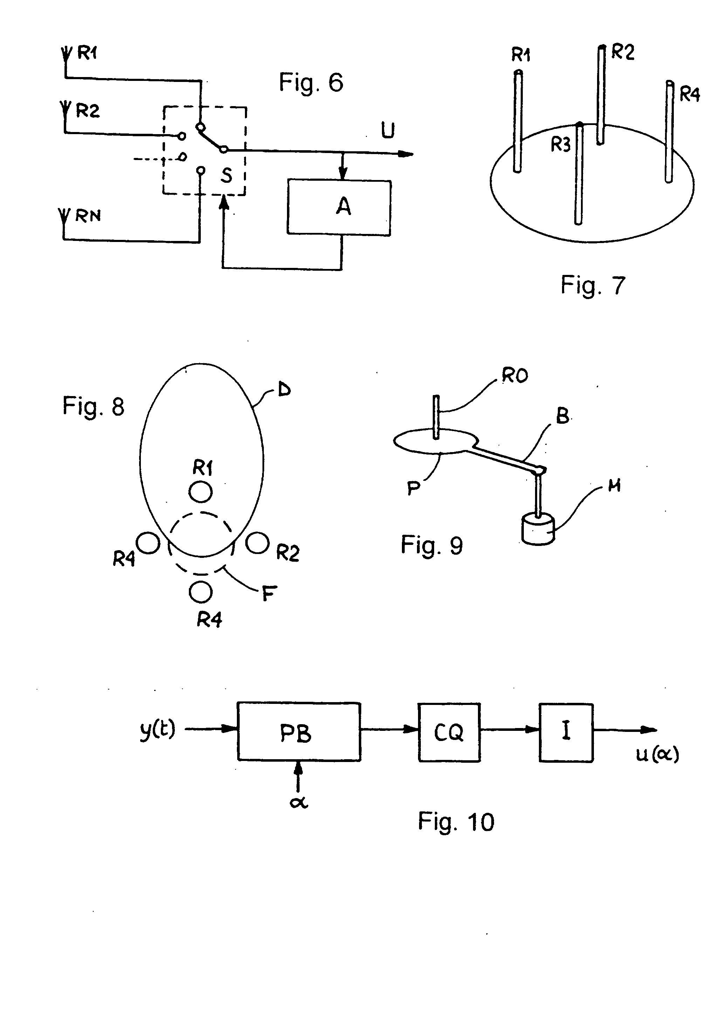

With reference to Fig. 6, in a system according to a first preferred embodiment of the invention, a plurality of stationary antennas R1, R2, ..., RN are arranged in respective positions for receiving signals originating from different points in space. If $H_i(\omega)$ is the frequency response of the channel defined between the transmitting antenna and the i-th receiving antenna, the points in space should be apart from one another so that there is statistical independence among the $H_i(\omega)$.

The outputs from antennas R1, R2, ..., RN are connected to respective inputs of a selector S, shown schematically, which delivers one of the antenna signals to an output U leading to the input of a conventional radio receiver R. The singal on output U is also applied to an analyzer A, described below, which performs an estimate of the received signal, on the basis of spectral distirbution and/or error rate and/or ability of a receiver to adequately receive the signal, and, if the quality of the current signal is estimated to be below a predetermined threshold, orders selector S to switch to the output of the next antenna.

Figs. 7 and 8 show an examplary array of four antennas comprising respective radiators R1, R2, R3, R4, which may be directional or with low directivity and are arranged in space as four equispaced sectors covering 360°. If moderately directional elements are used, the beams of the individual elements should be partly overlapping and complementary to one another, though they do not need to be directed as shown in Fig. 8 with respect to the elements. The individual radiators are arranged on a circle having a typical diameter ranging between 0.3 and 0.4 times the wavelength at the central frequency in the operating band.

Of the four existing radiators only one is active, the remaining radiators operating as parassite elements and contributing to set up an anisotropic radiation diagram. A choice of the active element is made by selector S, which establishes connection to the feeder line. Fig. 8 shows the radiation diagram D for the array comprising one active element and three passive element, curve F being the locus of the center of phases as the active element is changed. For a more detailed description of an array of radiators of this type, see: Stephanie L. Preston et al., "Base-Station Tracking in Mobile Communications Using a Switched Parasitic Antenna Array", in *IEEE Transactions on Antennas and Propagation*, vol. 46, No. 6, June 1998.

As shown on Fig. 8, the combination of the contributions received from the active radiator and the three passive radiators produces a directivity effect in an angular sector whose orientation changes with the choice of the active radiator. The aperture of the radiation diagram is larger than the minimum operating frequency and smaller than the maximum operating frequency, while the orientation is not predetermined, but rather changes with the choice of the active element. An embodiment with $n$ radiating elements has $n$ orientation options. Simultaneously with the element switching and the beam switching, the center of phase of the global radiating system rotates around the geometric center of the radiating system. The functionality of the antenna is such that in any case it has a directionality and that the position of its center of phase changes as the selected radiator changes.

The array can incorporate radiators of either polarization, but in this case the selector should include a device for selecting the polarization. One or more parallel ground planes may provided, axially along a vertical line through the geometric center of the positions of the radiators, used as reflectors to improve the vertical beam directivity; similarly, an impedance matching network may be provided. It can also be envisaged that, for wide-band versions, the apparatus may include several embodiments on sub-bands complementary to the covering of the total band.

More generally, the selector may consist of a controller capable of performing a linear combination of the signal contributions from the antennas:

$$y(t)=a_1 \cdot y_1(t)+a_2 \cdot y_2(t)+a_3 \cdot y_3(t)+...$$

where $y_i$ are the signals coming from the antennas, and $a_i$ are complex coefficients, which may take not only the values 0 or 1, but also other values, to provide further, different radiation diagrams.

Instead of an array of stationary radiators which are selectable by a selector, as described and shown with reference to Figs. 7 and 8, the invention provides an antenna system comprising a single, low-directivity radiator or an array of radiating elements as described above, with a pre-selected active radiating element, which antenna system is capable of continuously revolving in a horizontal plane as driven by an actuator controlled by the analyzer. This antenna system is equivalent to the system of Figs. 7 and 8, since it can change the direction of the radiation beam, with the advantage that, beside the four directions at right angles of the system of Figs. 7 and 8, it can also take intermediate positions. This system will be obvious to a person skilled in the field and will therefore not be further described.

Alternatively, a significant change of the signal reception characteristic can also be obtained from an omnidirectional antenna by displacing its center of phase, and therefore shifting the reciprocal phases of the echoes. The expression "antenna directivity" in this disclosure is intended to refer also to this kind of change in the conditions of reception.

By way of example, Fig. 9 shows an omnidirectional or low-directivity radiator RO, borne on a plate P that is cantilevered on an arm B, itself driven to revolve by a motor M. By stepping motor M under control of the analyzer, the center of phase of radiator RO is changed, and possibly the direction of its radiation diagram.

For the evaluation of the antenna signal by analyzer A, the invention provides for a first step of analysis of the signal's spectral energy distribution, i.e. subdivision of the channel band into a plurality of sub-bands, either directly at the frequency of the radio channel or, equivalently, after frequency conversion as typical in a superheterodyne receiver. The analysis is preferably made by means of a tunable filter whose frequency is shifted over the band of the signal being considered, although a bank of filters extending over the signal band may be used, or even a selective receiver or a spectrum analyzer.

In a second step of the inventive method, the spectral energy distribution obtained as above described is processed to extract from it the position and magnitude of the notches in $H(\omega)$ as caused by short echoes, and the signal quality is evaluated from the results.

Finally, in a third step, the invention provides that, if the monitored condition exceeds a predetermined threshold, the above two steps of signal analysis for each of the conditions of directivity (or rather diversity) of the antenna system are atuomatically repeated and the condition leading to the best evaluation is chosen as operating condition.

The above steps of analysis and evaluation for the different antenna conditions can be performed automatically at periodical time intervals but, according to the implementation regarded as most advantageous at present, the signal is evaluated at the time the apparatus is turned on, and preferably again at each change of channel, but it is imperative that the above steps are performed whenever the signal quality exceeds the maximum error rate required for a useful reconstruction of the signal in the receiver.

The block diagram of Fig. 10 refers to a preferred embodiment of analyzer A (see Fig. 6), which should evaluate short echo while substantially rejecting long echoes: the received signal, $y(t)$, is filtered in a tunable band-pass filter PB having a frequency response $F(\omega - a)$, where $F(\omega)$ is the basic bass-pass filter and $\alpha$ is the center frequency.

The output of filter PB is connected to a squaring circuit CQ which delivers the square of its input signal, and its output is in turn connected to an integrator U to deliver an output signal $u(\alpha)$ constituting an evaluation of the power in filter PB. Filter PB is frequency-shifted over the band of the received signal, by changing $\alpha$.

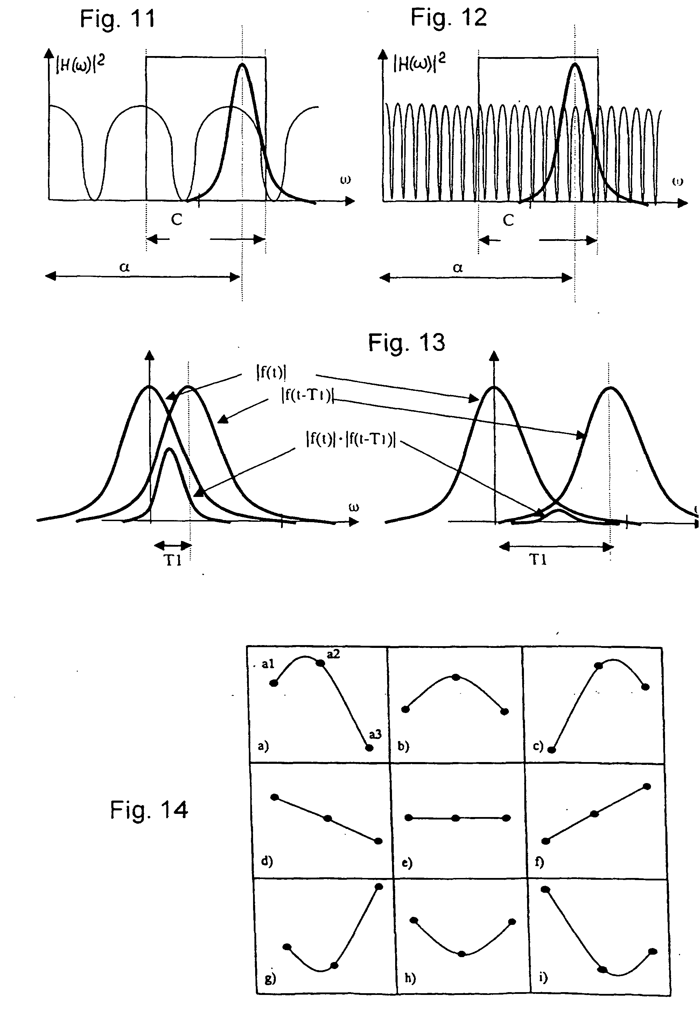

In order to allow that evaluation $u(\alpha)$ is sensitive to the effect of short echoes while having a good rejection to the effect of long echoes, the band-pass filter should have an appropriate bandwidth: it can be seen from the diagrams of Figs. 10 and 11 that, as $\alpha$ varies, output $u(\alpha)$ does not copy the ripple of $|H(\omega)|^2$ if such ripple is such that it comprises many cycles within the band of the filter (Fig. 12).

This effect attenuates the contribution of long echoes, which cannot be effectively managed by the antenna system, and, in the case of C-OFDM signals, does not degrade reception.

The system described in Fig. 10 is not linear, but it can be shown that two identical input signals which are time-shifted by a delay $T_1$, produce an output response decreasing as $T_1$ increases.

In fact, let $y(t)=\delta(t)+\delta(t-T_1)$. The system's output is then:

$$u(a)=$$
$$\int_{t=-\infty}^{\infty} |[\delta(t)+\delta(t-T_1)]*[f(t)\cdot e^{jat}]|^2 dt=$$
$$\int_{t=-\infty}^{\infty} |f(t)\cdot e^{jat}+f(t-T_1)\cdot e^{ja(t-T_1)}|^2 dt=$$

$$=\int_{t=-\infty}^{\infty} ||f(t)|\cdot e^{j\{\varphi\{f(t)\}+at\}}+|f(t-T_1)|\cdot e^{j\{\varphi\{f(t-T)\}+at-T\}}|^2 dt=$$

and by using Carnot's formula:

$$=\int_{t=-\infty}^{\infty} |f(t)|^2+|f(t-T_1)|^2+2|f(t)|\cdot|f(t-T_1)|\cdot\cos(\varphi\{f(t)\}-\varphi\{f(t-T)\}+a\cdot T_1)dt=$$

$$=\int_{t=-\infty}^{\infty} |f(t)|^2+\int_{t=-\infty}^{\infty} |f(t-T_1)|^2+2\int_{t=-\infty}^{\infty} |f(t)|\cdot|f(t-T_1)|\cdot\cos(\varphi\{f(t)\}-\varphi\{f$$

The first two terms are constant; the third term is affected by product $|f(t)|\cdot|f(t-T_1)|$, which is different from zero if $T_1$ is small with respect to the duration of $f(t)$, otherwise it tends to zero, as exemplified in Fig. 13, if a filter with a bell-shaped $f(t)$ is assumed.

Based on the above disclosure, it has been found that for the evaluation of notches due to short echoes only, which tend to create spectral distributions of the kind shown in Fig. 11, it is sufficient to subdivide the signal band into three sub-bands. Accordingly, in a particularly advantageous embodiment of the invention, three values of the frequency, uniformly spaced on the signal band, are assigned to $\alpha$ in the analyzer of Fig. 10. The values a1, a2 e a3 are then measured downstream of the analyzing filter for the signal level. Fig. 14 shows the spectral configurations obtainable as the echo phase changes, depending on the relative values taken by a1, a2 e a3:

a) left hump

b) center hump

c) right hump

d) decreasing slope

e) leveled

f) increasing slope

g) left notch

h) center notch

i) right notch

The following indicators are used:

dp1 = a2 - a1 (evaluation of first derivative, left)

dp2 = a3 - a2 (evaluation of first derivative, right)

2dp = a3 - a1 (evaluation of first derivative, mean)

Suitable laboratory tests have led to determine ranges of values for the above indicators, which are capable of discriminating different criticalities of the the received signal.

For instance, in reception tests in presence of different combinations of values for dp1, dp2 e 2dp, by using a logarithmic level meter and a 2.5-MHz filter PB, the following empiric table has been found for the selection of antenna directivity:

TABLE I

| Measured parameters | Spectrum criticality |
|---|---|
| dp1>30 | very critical |
| dp2<-30 | very critical |
| dp1>20 and 10<dp2<-10 | very critical |
| 10<dp1<-10 and dp2<-20 | very critical |
| -9<2dp<9 | good |
| 15<dp1<22 and-3<dp2<3 | good |
| -22<dp2<-15 and -3<dp1<3 | good |
| -4<dp1<4 and 12<dp2<-12 | good |
| all other cases | critical |

On the basis of the above table, the analyzer controls the positions or directivities of the antenna or array of antennas.

The apparatus according to the invention may be implemented as a separate device, immediately applicable to any receiver available on the market, or it may obviously be integrated into the receiver itself. In either case the directive antenna system is identical, although the analyzer may take different inplementations.

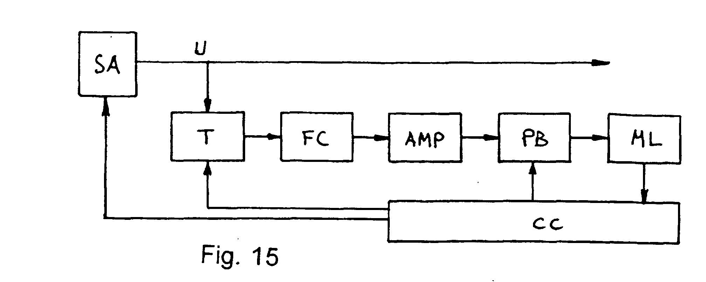

Fig. 15 is a block diagram of a self-contained apparatus according to the invention, which may be connected to a digital television receiver operating under protocol DVB-T. The latter comprises a television tuner T, which receives, from the output U of an antenna system SA as shown in Figs. 7 and 8, the same signal applied to the antenna input of a conventional television receiver (not shown) and, after converting it to an intermediate frequency, applies it to an amplifier AMP via a channel filter FC. The output signal from amplifier AMP is applied to an analyzing band-pass filter (see Fig. 10) with a 2.5 MHz bandwidth and with controllable frequency (for instance, controllable by a voltage, through a varicap diode or a varactor or other device). The output signal from the band-pass filter is evaluated by a level meter ML, say as described above with reference to Fig. 10.

The apparatus further comprises a control circuit CC which implements the operating cycle according to the method of the invention: tuner T is tuned on the selected channel; its output signal, after being cleaned by channel filter FC from signals coming from adjacent channels, is analyzed by shifting the analyzing filter PB by discrete steps and by measuring the signal level at each step in block ML. As discussed above, with an appropriate choice of the bandwidth of the analyzing filter (2.5 MHz is an adequate value), the output evaluation has a high rejection of contributions due to long echoes. The output signal, after being sampled at (at least) three frequency values with a suitable sampling step in the frequency domain (2.5 MHz is an adequate value, although it can range from 10 kHz to 10 MHz), is processed by taking its first derivative (Fig. 14). The values of dp1, dp2 e 2dp are mapped to an evaluation coefficient by using Table I. The antenna system is driven to position the antenna in the spot giving the most favorable evaluation coefficient. Control circuit CC is easy to be implemented by digital techniques, based on the operating specifications given above and, accordingly, a description is omitted for simplicity.

The inventive apparatus, rather than being implemented as a separate device operating side-by-side with the digital television receiver, may be integrated into the latter, with considerable advantage in simplicity and consequent cost reduction, since data and functions already available as part of the conventional receiver may be used without having to replicate them.

Control circuit CC of Fig. 15 can advantageously manage additional functions beside what has been described above. For instance, for the application to digital terrestrial television, this circuit might receive the channel-change information from the receiver's remote control and set the analyzer to operate on the selected channel, the control circuit to use appropriate combinations of parameters, and the antenna system to operate on the selected band. These not indispensable, partly conventional functions will be obvious for a person skilled in the art, without the need for a detailed disclosure.

**Claims**

1. A method for the reception of digital, multi-carrier radio signals affected by degradation due to echoes or multiple paths, particularly C-OFDM signals, comprising the steps of:

   - picking up the signal by an adjustable-directivity antenna system;
   - evaluating the quality of the picked-up signal for a plurality of directivity states of the antenna system;
   - automatically modifying the directivity of the antenna system by choosing the directivity state affording the most favourable quality evaluation;

   <u>**characterized in that**</u> the evaluation of the quality of the picked-up signal is carried out by the following steps:

   - analyzing the spectral energy distribution of the signal on at least three sub-bands of signal frequencies;
   - determining an evaluation of the signal quality based on the presence, position and magnitude of energy notches in the signal spectrum caused by short echoes.

2. Apparatus for carrying out the method of claim 1 that comprises:

   - an antenna system (R1, R2, ..., RN, S) having an adjustable directivity;
   - an analyzer (A) fed by the output signal from the antenna system, for determining the presence, position and magnitude of energy notches in the signal spectrum, as caused by short echoes, and for delivering an output signal applied to the antennna system for changing its directivity whenever the position and magnitude of the energy notches is distant from predetermined parameters.

3. The apparatus of claim 2, **characterized in that** the antenna system comprises an array of a plurality of stationary radiators (R1, R2, ..., RN) and a selector (S) for picking said output signal from any one of the radiators, and **in that** the analyzer (A) controls the selector (S) for changing the radiator from which the output signal is picked whenever the position and magnitude of the energy notches is distant from predetermined parameters.

4. The apparatus of claim 3, **characterized in that** the array of stationary radiators comprises four radiators arranged in a square.

5. The apparatus of claim 2, **characterized in that** the antenna system comprises a directional radiator that is rotatable by motor means and **in that** the analyzer (A) orders the stepping of the motor means by a predetermined increment whenever the position and magnitude of the energy notches is distant from predetermined parameters.

6. The apparatus of any of claims 2 to 5, **characterized in that** the analyzer (A) comprises:

   - filtering means (PB) receiving the signals contained in a desired channel and subdividing them into at least three sub-bands;

   - level meter means (ML) connected for receiving said signals subdivided into sub-bands and for delivering respective evaluations of the quality of the signal in each sub-band; and

   - control means receiving said evaluations and controlling the change of directivity of the antenna system so that the signal quality is maximized.

7. The apparatus of claim 6, **characterized in that** said filtering means (PB) comprise a band-pass filter having an adjustable center frequency.

8. The apparatus of claim 6, **characterized in that** said filtering means (PB) comprise a bank of band-pass filters.

9. The apparatus of any of claims 6 to 8, **characterized in that** said sub-bands are three in number.

10. The apparatus of claim 9, **characterized in that** the width of each of said sub-bands is in the range 10 kHz to 10 MHz.

11. The apparatus of claim 10, **characterized in that** the width of each of said sub-bands is 2.5 MHz.


**Patentansprüche**

1. Verfahren zum Empfang von digitalen Mehrträger-Radiosignalen, die aufgrund von Echos oder Vielpfadübertragungen beeinträchtigt sind, insbesondere C-OFDM Signalen, umfassend die Schritte des:

   - Aufnehmens des Signals mittels eines Antennensystems mit einstellbarer Richtcharakteristik;
   - Auswertens der Qualität des aufgenommenen Signals für eine Vielzahl von Richtzuständen des Antennensystems;
   - automatischen Abänderns der Richtcharakteristik des Antennensystems durch Auswählen des Richtzustands, welcher die günstigste Qualitätsauswertung gestattet;

   **dadurch gekennzeichnet, dass** das Auswerten der Qualität des aufgenommenen Signals durch die folgenden Schritte durchgeführt wird:

   - Analysieren der spektralen Energieverteilung des Signals auf wenigstens drei Unterbändern von Signalfrequenzen;
   - Bestimmen einer Auswertung der Signalqualität basierend auf dem Vorhandensein, der Lage und dem Ausmaß von Energieeinbrüchen im Signalspektrum, die durch kurze Echos verursacht sind.

2. Vorrichtung zum Durchführen des Verfahrens gemäß Anspruch 1, umfassend:

   - ein Antennensystem (R1, R2, ..., RN, S) mit einer einstellbaren Richtcharakteristik;
   - einen Analysator (A), dem das Ausgangssignal von dem Antennensystem zugeführt wird, zum Bestimmen des Vorhandenseins, der Lage und des Ausmaßes von durch kurze Echos im Signalspektrum erzeugten Energieeinbrüchen und zum Abgeben eines dem Antennensystem zugeführten Ausgangssignals zum Ändern von dessen Richtcharakteristik immer dann, wenn die Lage und das Ausmaß von Energieeinbrüchen von vorbestimmten Parametern entfernt sind.

3. Vorrichtung gemäß Anspruch 2, **dadurch gekennzeichnet, dass** das Antennensystem eine Matrix aus einer Vielzahl stationärer Radiatoren (R1, R2, ..., RN) und eine Auswahleinrichtung (S) zum Aufnehmen des Ausgangssignals von einem der Radiatoren aufweist, und dass der Analysator (A) die Auswahleinrichtung (S) derart steuert, dass der Radiator, von welchem das Ausgangssignal aufgenommen wird, immer dann geändert wird, wenn die Lage und das Ausmaß der Energieeinbrüche von vorbestimmten Parametern entfernt sind.

4. Vorrichtung gemäß Anspruch 3, **dadurch gekennzeichnet, dass** die Matrix stationärer Radiatoren vier zu einem Quadrat angeordnete Radiatoren umfasst.

5. Vorrichtung gemäß Anspruch 2, **dadurch gekennzeichnet, dass** das Antennensystem einen Richt-Radiator umfasst, der durch Motormittel drehbar ist, und dass der Analysator (A) eine Schritt-Bewegung der Motormittel um eine vorbestimmte Schrittweite immer dann anordnet, wenn die Lage und das Ausmaß der Energieeinbrüche von vorbestimmten Parametern entfernt sind.

6. Vorrichtung gemäß einem der Ansprüche 2 bis 5, **dadurch gekennzeichnet, dass** der Analysator (A) umfasst:

   - Filtermittel (PB), welche die in einem gewünschten Kanal enthaltenen Signale empfangen und diese in wenigstens drei Unterbänder unterteilen;

- Pegelmessmittel (ML), die verbunden sind, um die in Unterbänder unterteilten Signale zu empfangen und um entsprechende Qualitätsauswertungen des Signals in jedem Unterband zur Verfügung zu stellen; und
- Steuermittel, welche die Auswertungen empfangen und eine Änderung der Richtcharakteristik des Antennensystems steuern, so dass die Signalqualität maximiert wird.

**7.** Vorrichtung gemäß Anspruch 6, **dadurch gekennzeichnet, dass** die Filtermittel (PB) ein Bandpassfilter mit einer einstellbaren Mittenfrequenz aufweisen.

**8.** Vorrichtung gemäß Anspruch 6, **dadurch gekennzeichnet, dass** die Filtermittel (PB) eine Bank von Bandpassfiltern umfassen.

**9.** Vorrichtung gemäß einem der Ansprüche 6 bis 8, **dadurch gekennzeichnet, dass** die Anzahl der Unterbänder drei beträgt.

**10.** Vorrichtung gemäß Anspruch 9, **dadurch gekennzeichnet, dass** die Breite eines jeden der Unterbänder sich im Bereich zwischen 10 kHz und 10 MHz bewegt.

**11.** Vorrichtung gemäß Anspruch 10, **dadurch gekennzeichnet, dass** die Breite eines jeden der Unterbänder 2,5 MHz beträgt.

**Revendications**

**1.** Un procédé de réception de signaux radio numériques à porteuses multiples affectés par la dégradation due aux échos ou aux voies multiples, particulièrement les signaux orthogonaux en multiplex à division de fréquence, codés (signaux C-OFDM), comprenant les étapes qui consistent :

- à capter le signal par un système d'antennes à directivité réglable ;
- à évaluer la qualité du signal capté pour une pluralité d'états de directivité du système d'antennes ;
- à modifier automatiquement la directivité du système d'antennes en choisissant l'état de directivité qui offre l'évaluation de qualité la plus favorable ;

    **caractérisé en ce que** l'évaluation de la qualité du signal capté est effectuée par les étapes suivantes qui consistent :

- à analyser la distribution de l'énergie spectrale du signal sur au moins trois sous-bandes de fréquences du signal ;
- à déterminer une évaluation de la qualité du signal établie sur la base de la présence de la position et de la grandeur des encoches d'énergie, dans le spectre du signal, causées par des échos courts.

**2.** Appareil pour exécuter la méthode de la revendication 1, comprenant :

- un système d'antennes (R1, R2, ..., RN, S) ayant une directivité réglable ;
- un analyseur (A) alimenté par le signal de sortie provenant du système d'antennes pour déterminer la présence, la position et la grandeur des encoches d'énergie dans le spectre du signal, telles qu'elles ont pour cause les échos courts et pour délivrer un signal de sortie appliqué au système d'antennes pour modifier sa directivité, chaque fois que la position et la grandeur des encoches d'énergie s'écartent de paramètres prédéterminés.

**3.** L'appareil selon la revendication 2, **caractérisé en ce que** le système d'antennes comprend un réseau d'une pluralité d'émetteurs (R1, R2, ..., RN) et un sélecteur (S) pour capter ledit signal de sortie à partir de l'un quelconque des émetteurs et **en ce que** l'analyseur (A) commande le sélecteur (S) pour changer l'émetteur à partir duquel le signal a été capté, chaque fois que la position et la grandeur des encoches d'énergie s'écartent de paramètres prédéterminés.

**4.** L'appareil selon la revendication 3, **caractérisé en ce que** le réseau d'émetteurs stationnaires comprend quatre émetteurs disposés en carré.

**5.** L'appareil selon la revendication 2, **caractérisé en ce que** le système d'antennes comprend un émetteur directionnel entraîné en rotation par un moyen moteur et **en ce que** l'analyseur (A) commande l'avance pas à pas du moyen moteur d'un incrément prédéterminé chaque fois que la position ou la grandeur des encoches d'énergie s'écartent de paramètres prédéterminés.

**6.** L'appareil selon l'une quelconque des revendications 2 à 5, **caractérisé en ce que** l'analyseur (A) comprend :

- un moyen de filtrage (PB) qui reçoit les signaux contenus dans un canal désiré et les subdivise en au moins trois sous-bandes ;
- un moyen de décibel-mètre (ML) connecté pour recevoir lesdits signaux subdivisés en sous-bandes et pour délivrer des évaluations respectives de la qualité du signal dans chaque sous-bande ; et
- un moyen de commande qui reçoit lesdites évaluations et qui commande le changement de directivité du système d'antennes de sorte que la qualité du signal atteigne une valeur maximum.

**7.** L'appareil selon la revendication 6, **caractérisé en ce que** ledit moyen de filtre (PB) comprend un filtre passe-bande ayant une fréquence centrale réglable.

**8.** L'appareil selon la revendication 6, **caractérisé en ce que** ledit moyen de filtre (PB) comprend un banc de filtres passe-bande.

**9.** L'appareil selon l'une quelconque des revendications 6 à 8, **caractérisé en ce que** lesdites sous-bandes sont au nombre de trois.

**10.** L'appareil selon la revendication 9, **caractérisé en ce que** la largeur de chacune desdites sous-bandes se situe dans une plage de 10 kHz à 10 MHz.

**11.** L'appareil selon la revendication 10, **caractérisé en ce que** la largeur de chacune desdites sous-bandes est de 2,5 MHz.

EP 1 324 512 B1

Fig. 1

Fig. 2

Fig. 3

Fig. 4

Fig. 5

12

Fig. 6

Fig. 7

Fig. 8

Fig. 9

Fig. 10

Fig. 11

Fig. 12

Fig. 13

Fig. 14

Fig. 15